# EUROPEAN PATENT APPLICATION

(11) **EP 1 808 920 A1**
(43) Date of publication of application: **18.07.2007**
(21) Application number: 06100305.9
(22) Date of filing: 12.01.2006
(51) Int. Cl.: H01M 4/90, H01M 8/10, B01J 21/06, B01J 23/00

(54) **Nanosized catalysts for the anode of a PEM fuel cell**

(71) Applicant: Stichting PowerPlus, 2300 AZ Leiden (NL)
(72) Inventor: Schoonman, Johannes, 2242 JH, Wassenaar (NL); Van de Krol, Roel, 2645 BH, Delfgauw (NL); Ten Hoopen, Sander, 2201 LC, Noordwijk (NL)
(74) Representative: van Heuvel, Margaretha

(57) **Abstract**

The present invention discloses a novel catalyst for the anode of polymer electrolyte membrane (PEM) fuel cells. The catalyst comprises nanosized and non-stoichiometric transition metal oxides (Magnéli-phase oxides). The catalyst materials may also comprise transition metal carbides and/or nitrides, and/or a solid solution based on the carbides nitrides. The novel catalyst may advantageously replace the noble metal catalyst in an anode of a PEM fuel cell.

## Description

The invention relates to catalysts for the anode of a polymer electrolyte membrane fuel cell.

Fuel cell technology is believed to play an important role in a future hydrogen-based sustainable energy economy. Fuel cells are electrochemical devices that convert chemical energy directly into electrical energy. By means of electrochemical oxidation of a fuel (usually hydrogen) and reduction of an oxidising agent (usually oxygen out of air) which takes place at, respectively, the anode and the cathode separated by an electrolyte, an electrical current is produced. Polymer-electrolyte membrane (PEM) fuel cells are currently identified to be the most attractive type of fuel cell for application in various products, such as vehicles and portable power devices, because of high power density, low operating temperature, etc.

However, due to technological bottlenecks and low-cost effectiveness, the pre-commercial application of this type of fuel cells presently remains focused on small niche markets. The high production cost of fuel cells is one of the reasons that inhibit the technology to be brought to mass markets. These high costs can primarily be ascribed to material costs and low volume manufacturing.

Currently noble metal electrocatalysts (e.g. platinum, ruthenium) are applied to increase the kinetics of redox reactions in a PEM fuel cell and they are critical to achieving the required levels of fuel cell power density and efficiency. Most of the commercial catalysts used in PEM fuel cells are carbon-supported Pt or Pt alloys. To obtain good kinetics, the area of the active catalyst surface is an important parameter. Therefore, the catalyst is dispersed on a carbon support with a large surface area.

However, these catalysts are sensitive to impurities in the fuel (e.g. carbon monoxide in reformate fuel). Consequently, the performance of PEM fuel cells deteriorates over time because of decreasing catalytic activity of the applied noble metal catalysts.

Furthermore, the applied noble metal catalyst system is very expensive and, therefore, contributes to the high pricing of PEM-based fuel cell system. For example, the platinum catalyst is a major component of overall fuel cell costs, generally accounting for at least 15 to 20 percent of the fuel cell production costs.

The development of a cheap and pollution resistant alternative for the expensive noble metal catalysts for PEM fuel cells could pave the way for realising much higher cost effectiveness, thus bringing wide-scale application of fuel cell and sustainable hydrogen technology one step closer.

The present invention now provides novel catalyst materials for electrodes for electrochemical cells such as PEM fuel cells that are cheaper and more pollution resistant than known noble metal catalysts.

Thus, in a first aspect, the present invention provides a catalyst for the anode of a PEM fuel cell comprising a nanosized and non-stoichiometric transition metal oxide.

Nanosized materials are materials of which at least one dimension of the material lies within a nanoscale level, i.e., a level equal to or smaller than 100 nm. The physical properties of such nanosized materials are dramatically changed and neither correspond to those of free atoms or molecules of the material nor to those of the micro- or normally sized bulk material. Nanosized materials are characterised by a high surface to volume ratio: a large fraction of the atoms resides at the surface or grain boundary. This characteristic strongly influences the chemical and physical properties of the material. For example nanosized particles have a stronger tendency to adsorb ions onto their surface than larger particles.

The nanosized transition metal oxides used in the catalyst of the invention advantageously exhibit non-stoichiometry, that is, the oxides are oxygen deficient with respect to fulfilling the valence requirements of the classical transition metal oxide stoichiometry. Such non-stoichiometry will lead to an oxide displaying regularly distributed crystal shear planes. Non-stoichiometric transition metal oxides with shear planes are commonly known as Magnéli-phase oxides.

It has surprisingly been found that nanosized and non-stoichiometric transition metal oxides display improved electrocatalytical properties and are suitable to replace the platinum catalyst in a PEM fuel cell.

Thus, the nanosized catalyst according to the invention comprises nanosized transition metal oxides with anion-deficient non-stoichiometry. Preferably, the nanosized catalyst comprises a transition metal oxide, wherein the transition metal oxide is represented by the formula MeₓO_{y}, where Me is represented by Molybdenum (Mo), Vanadium (V), Titanium (Ti), Niobium (Nb) and/or Tungsten (W) and the values for x and y are such that the oxides are Magnéli-phases.

Magnéli series of titanium oxide are expressed by the general formula: TiₙO₍₂ₙ₋₁₎ [3 ≤ n ≤ 10]. Magnéli series of vanadium oxide are expressed by the general formula: VₙO₍₂ₙ₋₁₎ [3 ≤ n ≤ 9]. Magnéli series of molybdenum oxide are expressed by the general formula: MOₙO₃ₙ₋₁ (n = 4, 8, 9) / MOₙO₃ₙ₋₂ (n = 18). Magnéli series of tungsten oxide are expressed by the general formula: WₙO₃ₙ₋₂ (n = 20, 24, 25, 40). Magnéli series of niobium oxide are Nb₉O₂₅, Nb₁₂O₂₉, Nb₂₂O₅₄, Nb₂₅O₆₂ Nb₄₇O₁₁₆, Nb₅₃O₁₃₂.

The nanosized catalyst according to the invention may comprise Magnéli-phase oxides of one or more transition metals, whereby also different Magnéli-phases of each transition metal oxide may be present. Preferably, the catalyst of the invention comprises a Magnéli-phase oxide of one transition metal. More preferably, the transition metal is titanium.

The present invention further envisages that the catalyst may also contain classical stoichiometric transition metal oxides. These stoichiometric transition metal oxides are converted *in situ* to non-stoichiometric transition metal oxides under the reducing conditions wherein the catalyst operates.

In one embodiment of the invention, the catalyst of the invention further comprises a transition metal carbide or nitride, and/or a solid solution based on the nitrides or carbides.

In another embodiment, the nanosized catalyst of the invention is in the form of nanoparticles having a diameter ranging from 1-100 nm, preferably from 1-50 nm, more preferably from 1-10 nm, most preferably from 2-5 nm.

The catalyst of the present invention is resistant to CO poisoning. Because of its nanosized character, the catalyst can assure a large and highly active surface area.

The nanosized catalyst of the present invention may be manufactured using "state-of-the-art" solid-state manufacturing technology for nanosized materials. For example, nanosized materials can be produced from the corresponding bulk material using sol-gel technology, chemical vapour deposition, aerosol spray pyrolysis, or electrostatic spray deposition. Nanosized particles can also be produced by a mechanical route, e.g. high-energy ball milling.

The nanosized oxides then are subjected to a reduction step at a high temperature, typically exceeding 1273 K, to produce the Magnéli-phase oxides.

The catalysts of the present invention may be employed as a catalyst in electrochemical processes. In particular, the catalyst of the invention may be employed as a catalyst in the anode of a PEM fuel cell, such an electrode being a further aspect of this invention. The catalyst of the invention may also serve as the evolution catalyst in a regenerative fuel cell system.

In the electrode of the invention, preferably the hydrogen oxidising electrode, the state-of-the-art noble metal catalyst is replaced by the catalyst of the first aspect of this invention.

The electrode comprises an electroactive catalyst layer and a porous electrically-conductive gas diffusion layer.

In order to realise the highest possible electroactive catalyst surface area, the electrode contains the nanosized catalyst preferably in the form of particles with a diameter ranging from 1-10 nm, more preferably from 2-5 nm, supported onto high surface area carbon particles (particle size ≤ 50 nm, e.g. Vulcan XC72R^{®} by Cabot). The carbon particle support ensures the electronic conductivity throughout the whole electroactive layer.

The porous gas diffusion layer is attached to the electroactive layer. This gas diffusion layer usually consists of a conductive carbon structure (carbon fiber paper or carbon cloth or similar woven / non-woven fabrics of conductive carbon fibers, typically with a thickness of 0.01 - 0.05 cm (e.g. TPG-H-060 by Toray). It provides a path for even gas distribution and the removal of products (gases and liquids) and facilitates the access of reaction gas to the electrocatalyst.

The catalyst surface-active area may be treated with a perfluorosulfonate ionomer (e.g. Nafion^{®} by DuPont) to increase proton conductivity to the polymer electrolyte membrane. To prevent the pores of the gas diffusion layer to become clogged with water, a hydrophobic polymer such as polytetrafluoroethylene (PTFE, Teflon) (5-30% (w/w as compared to the weight of the carbon structure) is applied onto the carbon structure to realise a hydrophobic surface.

The electrodes of a PEM fuel cell typically are provided as a membrane electrode assembly (MEA). The MEA comprises a solid polymer electrolyte membrane sandwiched between the two electrodes (anode and cathode).

The polymer electrolyte membrane of a PEM fuel cell is usually composed of a linear perfluorinated polyether polymer that has sulfonic acid groups incorporated into the bulk polymer matrix (for example, an ionomer such as Nafion^{®}). To achieve adequate proton conductivity by means of hydronium ions, the membrane must be sufficiently hydrated.

The MEA and the PEM fuel cell are further aspects of this invention.

### Example 1

### Manufacture of non-stoichiometric nanosized titanium oxide

Non-stoichiometric nanosized titanium dioxide is prepared by reduction of commercially available nanosized TiO₂ powder (diameter 30 nm, surface/weight 50m²g⁻¹, by Nanotech) at high temperature. The nanosized TiO₂ powder is dried at 110 °C overnight. To produce a non-stoichiometric titanium dioxide, the dried TiO₂ powder is heated to a temperature exceeding 1273 K and allowed to cool down to ambient temperature under a controlled atmosphere of hydrogen. For example, to obtain Magnéli-phase oxides mainly containing Ti₄O₇, reduction is carried out using hydrogen gas for 4 hours at 1323 K. By shortening reduction times, other non-stoichiometric oxides can be produced. The particle size of the obtained Magnéli-phase oxides is suitably reduced by ball milling.

Alternatively, Ti₄O₇ nanoparticles are prepared by subjecting commercially available Ebonex^{®} powder to a high-energy ball milling process.

### Example 2

### Manufacture of Nafion^{®}-bonded electrocatalyst nanoparticles comprising non-stoichiometric titanium oxide supported on activated Vulcan XC-72^{®}

A Nafion^{®} gel is prepared by boiling commercial Nafion in 1M sulfuric acid, solubilizing it by using the method of Martin (C.R. Martin et al. Anal. Chem. 54 (1982), 1631) to produce a solution in 1:1 ethanol/water. This solution is then boiled for several hours and concentrated.

Magnéli-phase titanium dioxide nanoparticles are adhered to a carbon substrate (Vulcan XC-72^{®}). This substrate is first activated by heating in a flow of CO₂ at 930 °C, until a weight loss of 27% is realised. The titanium dioxide nanoparticles are then adhered to this substrate by soaking the substrate in a colloidal solution containing Magnéli-phase titanium dioxide nanoparticles.

The Ti₄O₇-carbon-supported nanoparticles are mixed with sufficient water to produce a paste. A 50% suspension of hydrophobic PTFE is then manually mixed into the paste. Subsequently, the Nafion^{®} gel is added to give the required percentage of Nafion^{®} w/w. The smooth paste obtained is spread onto the gas diffusion layer. Alternatively, the paste is spread onto the Nafion^{®} polymer electrolyte membrane. Gas diffusion layer, electrocatalyst system and polymer electrolyte membrane are consequently hot-pressed, thus forming one side of a membrane electrode assembly (anode side) .

## Claims

1. A catalyst for the anode of a PEM fuel cell comprising a nanosized and non-stoichiometric transition metal oxide (a Magnéli-phase oxide).

2. The catalyst of claim 1, wherein the non-stoichiometric transition metal oxide is represented by the formula MeₓO_{y}, where Me is represented by Molybdenum (Mo), Vanadium (V), Titanium (Ti), Niobium (Nb), and/or Tungsten (W) and the values for x and y are such that the oxides are Magnéli-phase oxides.

3. The catalyst of claim 2, wherein Me is represented by Titanium.

4. The catalyst of any one of the preceding claims, comprising Magnéli-phase oxides of one transition metal or of a mixture of at least two transition metal oxides.

5. The catalyst of any one of the preceding claims, comprising, different Magnéli-phases of each transition metal.

6. The catalyst of any one of the preceding claims, further comprising a stoichiometric transition metal oxide that is *in situ* convertible to a non-stoichiometric transition metal oxide.

7. The catalyst of any one of the preceding claims, wherein the catalyst is in the form of nanoparticles having a diameter ranging from 1-100 nm, preferably from 1-50 nm, more preferably from 1-10 nm, most preferably from 2-5 nm.

8. The catalyst of any one of the preceding claims, wherein the catalyst is supported onto high surface area carbon particles.

9. The catalyst of any one of the preceding claims, further comprising a transition metal carbide or nitride, and/or a solid solution based on the nitrides or carbides.

10. An electrode or a membrane electrode assembly for a PEM fuel cell comprising a catalyst according to any one of the preceding claims.

11. A PEM fuel cell comprising an electrode according to claim 8.
